# EUROPEAN PATENT APPLICATION

(11) **EP 4 589 795 A2**
(43) Date of publication of application: **23.07.2025**
(21) Application number: 25181062.8
(22) Date of filing: 24.08.2023
(51) Int. Cl.: H02G 15/007

(54) **CABLE GLAND**

(30) Priority: 17.10.2022 EP 22201976; 17.10.2022 EP 23169237
(62) Divisional of application: 23757311.8
(71) Applicant: CMP Products Limited, St Peters Newcastle upon Tyne Tyne and Wear NE6 1BS (GB)
(72) Inventor: FRIZZELL, Lee, Newcastle upon Tyne, NE6 1BS (GB); MAKARI, Jonathan, Newcastle upon Tyne, NE6 1BS (GB)
(74) Representative: Murgitroyd & Company

(57) **Abstract**

A cable gland (2) has a body (4) for receiving part of a cable (18) extending through the cable gland, wherein the body (4) comprises an entry item (6) and a second body part (10) adapted to be mounted to the entry item (6). A barrier tube (20) is at least partly located within the body (4) and a seal (58) sealingly engages the cable (18) and the barrier tube (20) to prevent loss of pressure and/or transmission of flame past the seal (58) and to define a space for receiving curable liquid material and substantially prevent the curable liquid material from bonding to an internal surface of the entry item (6).

## Description

The present disclosure relates to cable glands, and relates particularly to cable glands permitting easy selection between non-barrier and barrier modes of operation.

Cable glands are used to connect cables to enclosures and generally exist in two types, non-barrier or barrier. In both types of cable gland, a cable passes through a gland body formed from two separate body parts which are attached to each other by screw threads in order to clamp the cable in position in the gland body. In the case of a cable having a metallic armour layer, a clamping device comprising a frusto conical clamping body and a clamping ring may clamp the armour layer between the clamping body and the clamping ring.

In non-barrier type cable glands, sealing contact between a body of the cable gland and a cable passing through the cable gland is made by means of at least one flexible seal extending between the inner sheath of the cable and the cable gland body. However, the sealing effect of such flexible seals is generally only applicable to the cable outer sheath and/or inner sheath; this means they are suitable for use in explosive environments only when the cable inner construction is robust enough to withstand the effects of an explosion and can prevent flames and/or explosive gasses from travelling through it, typically between gaps around the inner conductors or cores. If the cable is not capable of preventing this, then barrier type cable glands are therefore used in explosive environments, where additional sealing directly around the inner conductors or cores is required, as per the prevailing installation standards/codes.

Barrier cable glands are designed to prevent an explosion from causing flames to pass along the cable via the cable gland. The gap between the inner sheath or inner conductors of the cable and the cable gland body is sealed by means of curable resin material injected into the cable gland body. A dam of flexible material is generally provided between the inner sheath of the cable and the cable gland body to prevent uncured resin material from travelling too far along the cable before it has set, thereby enabling highly flowable resin material to be used, which in turn improves the quality of the barrier effect formed by reducing the likelihood of air voids occurring in the cured resin material.

Known cable glands suffer from the drawback that they are either provided as non-barrier type or barrier type, resulting in the necessity of storage of a large number of cable glands of both types, although both types of cable gland will frequently have many component parts in common. A further disadvantage with known cable glands is that if a user inadvertently purchases a non-barrier type cable gland, or finds that such a non-barrier type cable gland is unsuitable, conversion of a non-barrier cable gland to a barrier type involves removal of the non-barrier type seal and installation of a barrier tube and a resin dam which engages the cable and the barrier tube.

Another drawback of known cable glands of the non-barrier type is that the flexible seal may often have insufficient mechanical strength.

A further drawback of existing cable glands is that the clamping ring may become lost or incorrectly installed.

Embodiments of the present disclosure seek to overcome one or more of the above disadvantages.

According to an aspect of the disclosure, there is provided a cable gland as defined in claim 1.

By providing barrier means adapted to be at least partly located within the first body part, first sealing means adapted to sealingly engage the cable and the barrier means, wherein the barrier means and said first sealing means define a space for receiving curable liquid material such that the barrier means substantially prevents the curable liquid material from bonding to an internal surface of the first body part, and seal support means adapted to engage the first sealing means and to resist pressure applied to said first sealing means from said space, wherein the seal support means defines an aperture for enabling engagement of the cable with the first sealing means from a side of the first sealing means opposite to the space, this provides the advantage of enabling the first body part to be removed from the second body part after curing of the liquid material, which in turn enables the barrier formed by the cured liquid material to be inspected, thereby improving reliability of the cable gland. At the same time, the cable gland can be easily converted from the non-barrier to the barrier type without the need to remove any parts from the cable gland, or replace any internal components, thereby reducing the number of component parts which need to be stored, since the first sealing means is the same and the barrier means is present, regardless of whether the cable gland is the barrier or non-barrier type, and the barrier means is redundant in the case of non-barrier type cable glands.

The barrier means may comprise at least one hollow member for defining an annular path along an inner surface of the first body part.

By providing at least one hollow member mounted to the body and defining an annular path along an inner surface of the body, this provides the advantage of providing a flame path in the form of the annular path along an inner surface of the body for use in a barrier type cable gland, thereby enabling the cable gland to be easily converted between barrier and non-barrier types.

At least one said hollow member may be at least partly transparent.

This provides the advantage of enabling the quality of barrier, formed from curable barrier material, between the hollow member and the cable extending through the cable gland, to be inspected by means of removing one of the first or second body parts.

At least one said hollow member may be metallic.

This provides the advantage of causing flames passing along the annular path in the event of an explosion to be rapidly extinguished.

At least one said hollow member may be elastomeric.

The barrier means may comprise a first said hollow member and a second said hollow member adapted to abut said first hollow member to restrict access to an internal surface of said barrier means.

This provides the advantage of making the annular path the easiest path for flames to take in the event of an explosion, thereby improving the reliability of the cable gland.

The first hollow member may have an insertion portion adapted to be located inside a bore of the second hollow member.

This provides the advantage of more effectively preventing passage of gases or flame, in the event of an explosion, into the interior of the second hollow member.

At least one said hollow member may comprise an end portion adapted to engage an aperture defined by the first body part and having a stiffness greater than a part of said hollow member adjacent to said end portion.

This provides the advantage of minimising distortion of flexible hollow members as a result of filling with and/or curing of curable liquid material.

The seal support means may comprise a base portion adapted to be fixed relative to the first body part and a tapering portion extending from the base portion and defining said aperture.

The tapering portion may comprise a plurality of support members pivotably mounted to the base portion and adapted to engage the cable and support the first sealing means, wherein at least one said support member has a respective engaging surface for engaging a further said support member adjacent thereto as a result of pivoting of the support members relative to the base portion towards a longitudinal axis of said tapering portion, such that said support member and said further support member engage each other and slide relative to each other.

By providing a tapering portion comprising a plurality of support members pivotably mounted to the base portion and adapted to engage the cable and support a seal engaging the cable, wherein at least one said support member has a respective engaging surface for engaging a further said support member adjacent thereto as a result of pivoting of the support members relative to the base portion towards a longitudinal axis of said tapering portion, such that said support member and said further support member engage each other and slide relative to each other, this provides the advantage of improving the strength of the seal support to resisting an explosion, thereby enabling the seal to be used in both barrier and non-barrier type cable glands.

Said support member and said further support member may engage each other along a surface inclined relative to an axial plane of said tapering portion.

The base portion may be adapted to engage a peripheral portion of the first sealing means such that the base portion and the peripheral portion are clamped between the first body part and an inner clamping part of clamping means for clamping an armour layer of the cable.

This provides the advantage of enabling more compact construction of the cable gland.

The cable gland may further comprise indicating means adapted to be mounted to the body for indicating the presence of cured liquid material in the space.

The indicating means may be adapted to be secured in position on the body a result of mounting of the first body part to the second body part.

According to another aspect of the disclosure, there is provided a seal support as defined in claim 14.

By providing a tapering portion comprising a plurality of support members pivotably mounted to the base portion and adapted to engage the cable and support a seal engaging the cable, wherein at least one said support member has a respective engaging surface for engaging a further said support member adjacent thereto as a result of pivoting of the support members relative to the base portion towards a longitudinal axis of said tapering portion, such that said support member and said further support member engage each other and slide relative to each other, this provides the advantage of improving the strength of the seal support to resisting an explosion.

The support member and the further support member may engage each other along a surface inclined relative to an axial plane of the tapering portion.

According to a further aspect of the disclosure, there is provided a sealing device for a cable gland, the sealing device comprising a seal support as defined above and a seal for engaging a cable extending through a cable gland.

According to a further aspect of the disclosure, there is provided a cable gland comprising:
a body for receiving part of a cable extending through the cable gland, the body comprising a first body part and a second body part adapted to be mounted to the first body part; and
a sealing device as defined above.

According to a further aspect of the disclosure, there is provided a cable gland as defined in claim 18.

By providing retaining means adapted to resiliently engage an internal surface of the second body part and to resiliently deform as a result of insertion of the outer clamping part into the second body part to enable the outer clamping part to be mounted to the retaining means and be releasably retained in the second body part, this provides the advantage of enabling the outer clamping part to clamp the armour layer of a cable by mounting the second body part to the first body part, and the second body part to be subsequently removed from the first body part so that the effectiveness of clamping of the armour layer between the inner and outer clamping parts can be inspected. The further advantage is provided that by enabling the outer clamping part to be releasably retained in the second body part by means of the retaining means, the risk of loss of the outer clamping part is reduced.

The retaining means may comprise at least one first retaining part and the outer clamping part may comprise at least one protrusion, wherein at least one said first retaining part is resiliently displaceable to enable passage of at least one said protrusion past said deformable part.

At least one said first retaining part may be adapted to engage at least one recess of the outer clamping part to releasably retain the outer clamping part in the second body part.

At least one said first retaining part may include at least one respective inclined surface adapted to engage the outer clamping part and be resiliently displaced as a result of insertion of the outer clamping part into the second body part.

The retaining means may comprise at least one second retaining part adapted to engage an internal surface of the second body part, and the retaining means may be deformable to enable disengagement of at least one said second retaining part from the internal surface of the second body part.

The retaining means may comprise a discontinuous loop of resilient material.

Embodiments of the disclosure will now be described, by way of example only and not in any limitative sense, with reference to the accompanying drawings in which:-
Figure 1 is an exploded perspective view of a cable gland of a first embodiment;
Figure 2 is a side cross-sectional view of the cable gland of Figure 1 before mounting to a cable;
Figure 3 is a side cross-sectional view of the cable gland of Figure 2 after mounting to a cable when in the non-barrier mode;
Figure 4 is a side cross-sectional view of the cable gland of Figure 2 after mounting to a cable when in the barrier mode;
Figure 5 is an exploded perspective view of a cable gland body, retaining clip and armour clamping ring of the cable gland of Figure 1;
Figure 6 is a partly cut away perspective view of the cable gland body, retaining clip and armour clamping ring of Figure 5 in an assembled condition;
Figure 6A is an exploded perspective view corresponding to Figure 6;
Figure 7 is a perspective view of a support member for a flexible seal of the cable gland of Figure 1;
Figure 8 is a side view of the support member of Figure 7;
Figure 9 is an end view of the support member of Figure 7 in an uncompressed condition;
Figure 10 is an end view of the support member of Figure 7 in a compressed condition;
Figure 11 shows the assembled cable gland of Figure 1 with a marking collar indicating that the cable gland is the barrier type;
Figure 12 is an exploded perspective view of a cable gland of a second embodiment;
Figure 13 is a side cross-sectional view of the cable gland of Figure 12 before mounting to a cable;
Figure 14 is a side cross-sectional view of the cable gland of Figure 12 after mounting to a cable when in the non-barrier mode; and
Figure 15 is a side cross-sectional view of the cable gland of Figure 12 after mounting to a cable when in the barrier mode.

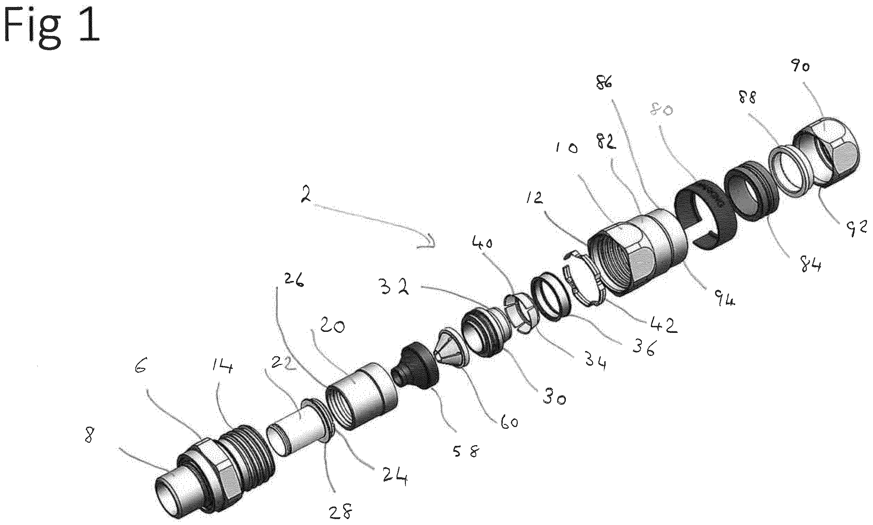

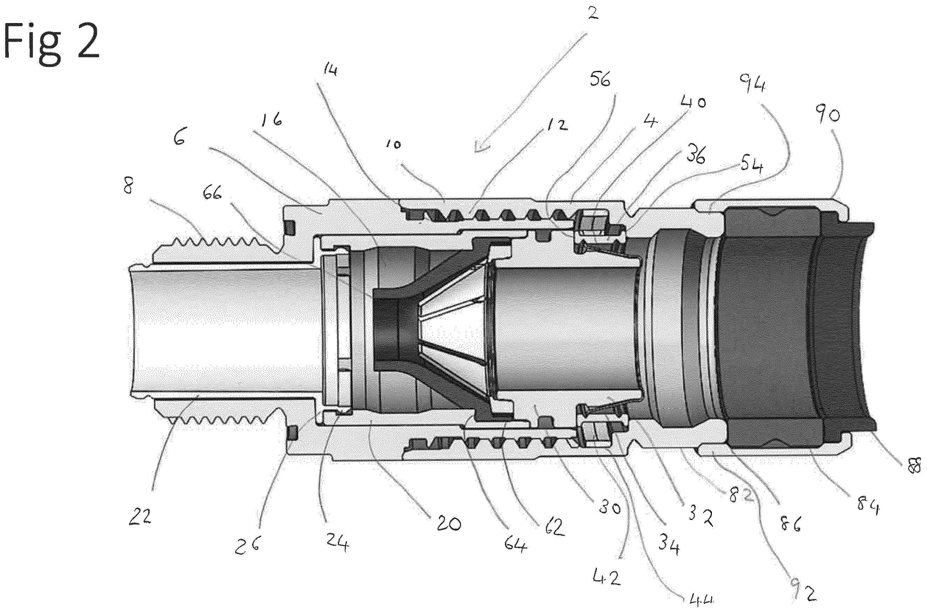

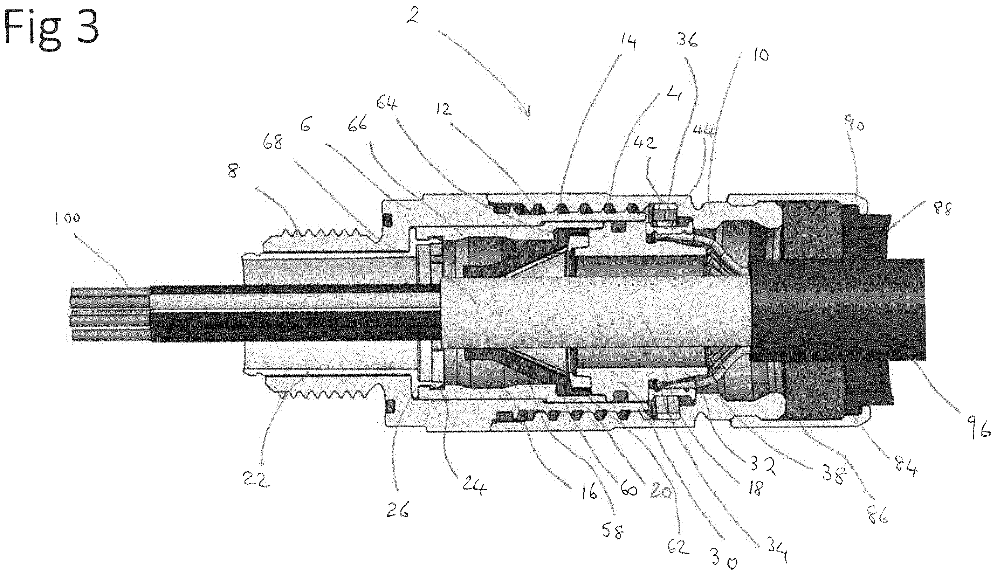

Referring to Figures 1 to 4, a cable gland 2 of a first embodiment has a body 4 formed from a first body part in the form of an entry item 6 adapted to be mounted by means of a first threaded surface 8 to an aperture in an enclosure (not shown) and a second body part 10 having a second threaded surface 12 engageable with a third threaded surface 14 on the entry item 6 to enable the entry item 6 and second body part 10 to be mounted to each other to define a chamber 16 (Figure 2) for receiving part of a cable 18 [Figure 3] to be mounted to the enclosure. The second threaded surface 12 and third threaded surface 14 have threads of larger pitch than, for example, the first threaded surface 8, to enable the entry item 6 and second body part 10 to be rapidly mounted to each other.

Barrier means in the form of a first hollow member comprising a metallic barrier tube 20 and a second hollow member in the form of a transparent tube 22 of plastic or elastomeric material is arranged in the entry item 6. The transparent tube 22 has an insertion portion in the form of protruding portion 24 which is received in an end portion 26 of a bore of the barrier tube 20 so that a flange 28 of the transparent tube 22 can abut the end portion 26 of the barrier tube 20 to prevent entry of gas or flame into the barrier tube 20 in the event of an explosion.

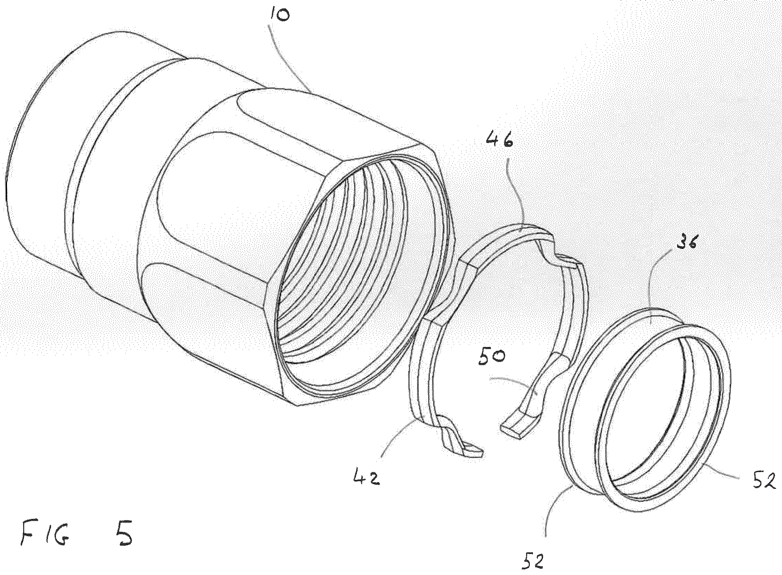

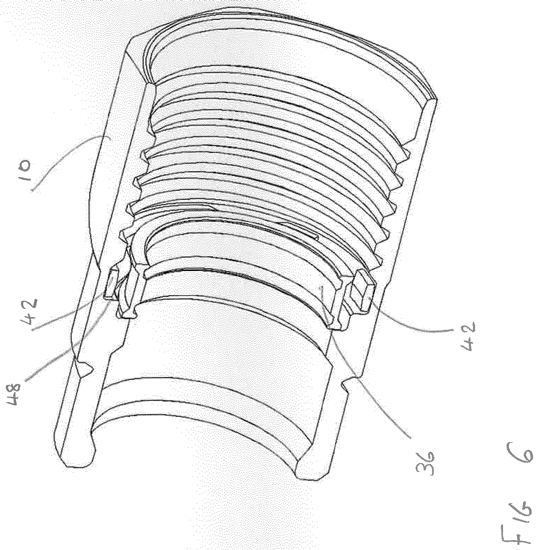

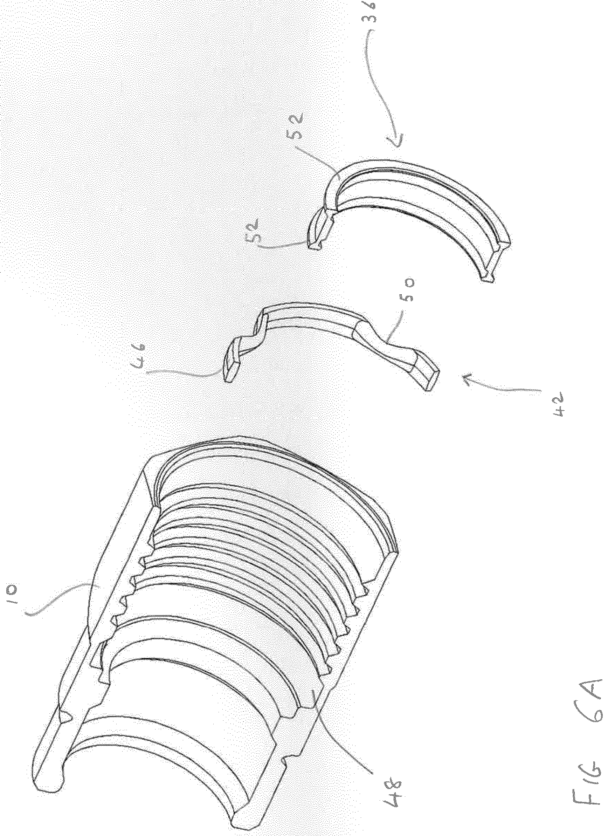

Clamping means in the form of an inner clamping part 30, comprising a clamp body 32 and a captive compensating armour cone 34, and an armour clamping ring 36, clamps an armour layer 38 of the cable 18 between the captive compensating armour cone 34 and the armour clamping ring 36. The armour cone 34 has radially inwardly deflectable portions 40 for enabling a range of thicknesses of armour layer 38 to be clamped. As shown more clearly in Figures 5, 6 and 6A, the armour clamping ring 36 is releasably held in the second body part 10 by means of retaining means in the form of a captive clip 42 formed from a discontinuous ring of resilient material such as metal or plastics having first retaining parts in the form of inclined portions 50 and second retaining parts in the form of retaining parts 46. The captive clip 42 can be deformed radially inwardly to enable the clip 42 to be located on an inner surface 44 of the second body part 10 to enable the clip 42 to expand so that retaining parts 46 of the clip 42 are securely located in a groove 48 on the inner surface 44 of the second body part 10. The inclined portions 50 are deformable radially outwards as a result of insertion of the armour clamping ring 36 into the second body part 10 to allow a protrusion in the form of ridge 52 on an end of the armour clamping ring 36 to move over the inclined portions 50 to releasably retain the clamping ring 36 in the second body part 10.

As shown more clearly in Figure 2, when the second body part 10 is fully mounted to the entry item 6, the clamping ring 36 is held between an abutment surface 54 on the second body part 10 and an abutment surface 56 on the clamp body 32.

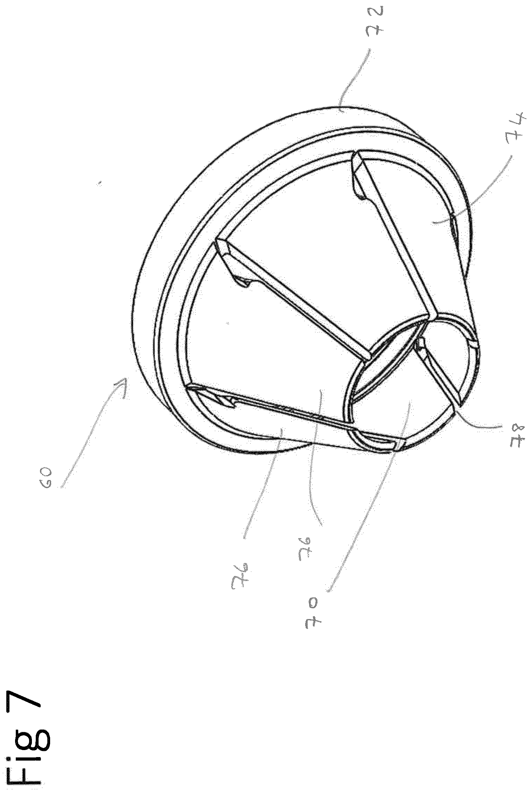

First sealing means in the form of a frustoconical silicone diaphragm seal 58 and seal support means in the form of a diaphragm sock 60 are clamped between an abutment surface 62 on the clamp body 32 and an annular surface 64 on the barrier tube 20. The diaphragm sock 60 defines an aperture 70 for receiving the cable 18 and has a generally cylindrical base portion 72 (Figure 7) and a tapering portion 74 formed from support members in the form of interlocking fingers 76 which have engaging surfaces in the form of flattened portions 78 which act to resist forces tending to deflect the fingers 76 radially inwards, so that the fingers 76 can easily move radially outwards, as a result of pivoting of the fingers 76 relative to the base portion 72, but provide resistance to being moved radially inwards. The base portion 72 of diaphragm sock 60 engages a peripheral portion of the diaphragm seal 58 and, as shown more clearly in Figure 2, when the cable gland 2 is assembled and the second body part 10 is fully mounted to the entry item 6, the peripheral portion of the diaphragm seal 58 and the base portion 72 of the diaphragm sock 60 are clamped between the barrier tube 20 and the clamp body 32, and the barrier tube 20 in turn abuts the flange 28 of the transparent tube 22. The diaphragm seal 58 has an aperture 66 which seals to the outer surface of an inner sheath 68 of the cable 18. The seal 58 prevents loss of pressure and/or passage of flame along the cable 18 in the event of an explosion, when in use in non-barrier mode.

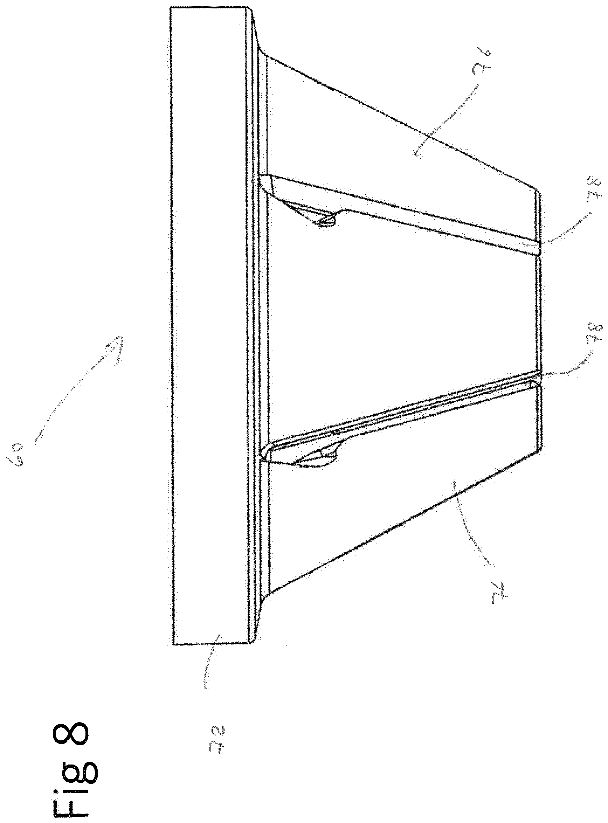

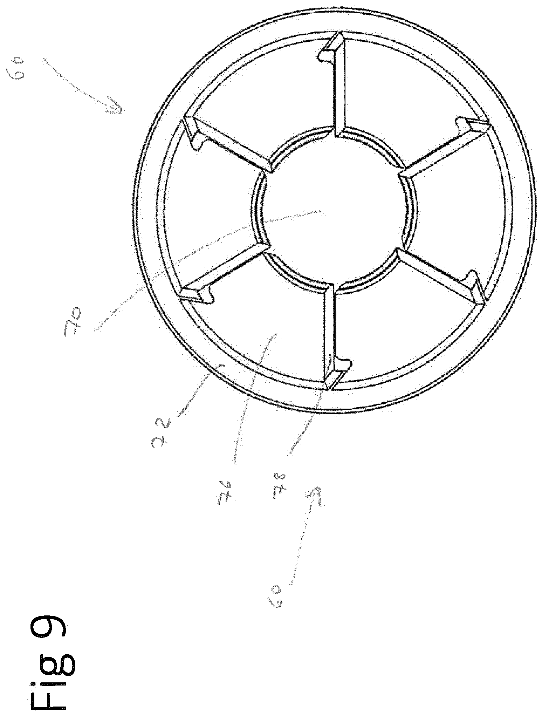

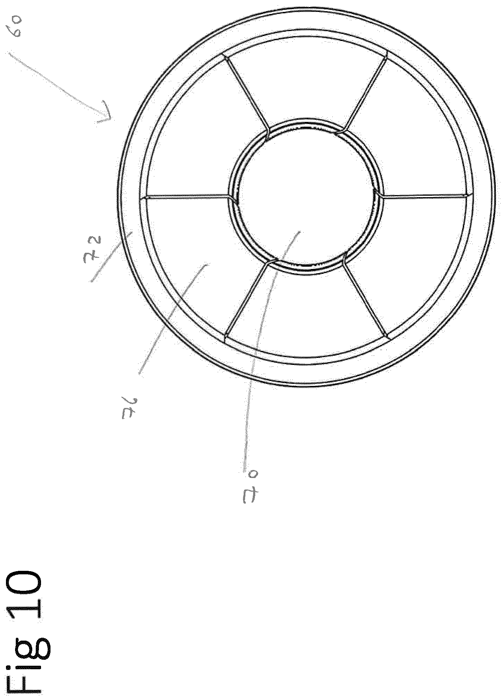

As shown more clearly in Figures 7 to 10, the flattened portions 78 of fingers 76 are arranged such that flattened portions 78 of adjacent fingers 76 engage each other along a surface inclined relative to an axial plane of the tapering portion 74 so that as the fingers 76 pivot relative to the base portion 72 towards longitudinal axis of the tapering portion 74, adjacent fingers 76 engage and slide relative to each other. It is also possible to provide the fingers 76 without flattened portions 78, i.e. with plain edges and without any interlocking between the fingers 76.

A marking collar 80, for indicating that the cable gland 2 is operating as a barrier type, is mountable to an external surface 82 of the second body part 10. A silicone outer seal 84 is clamped between an end surface 86 of the second body part 10 and a ferrule 88 located in an aperture of an outer nut 90. Mounting of the outer nut 90 to the second body part 10 by cooperating threaded surfaces 92, 94 compresses the outer seal 82 axially which causes the outer seal 82 to expand radially inwardly to seal against an outer sheath 96 of the cable 18.

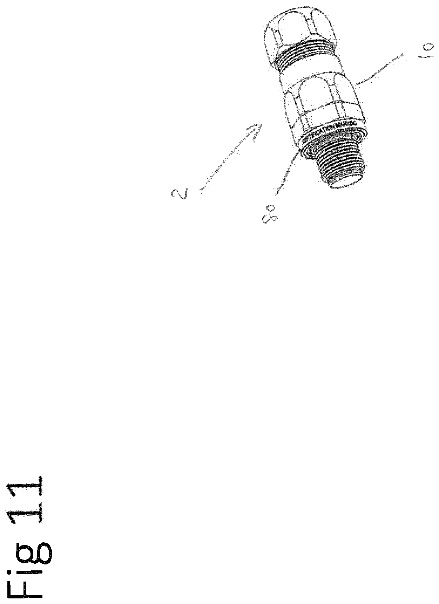

Operation of the cable gland 2 shown in Figures 1 to 11 will now be described.

The assembled cable gland 2 is initially supplied in the form shown in Figure 2. The outer nut 90 is loosened on the second body part 10 so that it is loosely held on the second body part 10, and the second body part 10 is separated from the entry item 6. The outer sheath 96, armour layer 38 and inner sheath 68 of the cable 18 are partially removed from the cable 18 to provide the cable 18 as shown in Figure 3 and the end of the cable 18 is pushed through the aperture 66 of diaphragm seal 58 in a right to left direction as shown in Figure 3 so that the diaphragm seal 58 seals to the outer surface of the inner sheath 68 of the cable 18. The seal 58 is generally sufficiently robust to prevent transmission of an explosion along the cable 18 to the atmosphere externally of the cable gland 2 and at the outer peripheral portion of the seal 58 where it engages the inner surface of the barrier tube 20. The ends of the armour layer 38 of the cable 18 are located between the clamping ring 36 and the compensating armour cone 34 and the second body part 10 is then tightly mounted to the entry item 6 to tightly clamp the armour layer 38. The clamping ring 36 stretches over the armour layer 38 when the second body part 10 is tightly mounted to the entry item 6, so that the clamping ring 36 becomes permanently retained on the clamped armour layer 38. This enables the armour termination to be inspected by removing the second body part 10 from the entry item 6, since the clamping ring 36 can then slide over the clip 42 to free the clamping ring 36 from the second body part 10.

The outer nut 90 is then mounted to the second body part 10 to provide the arrangement shown in Figure 3, which is ready for use as a non-barrier type cable gland 2.

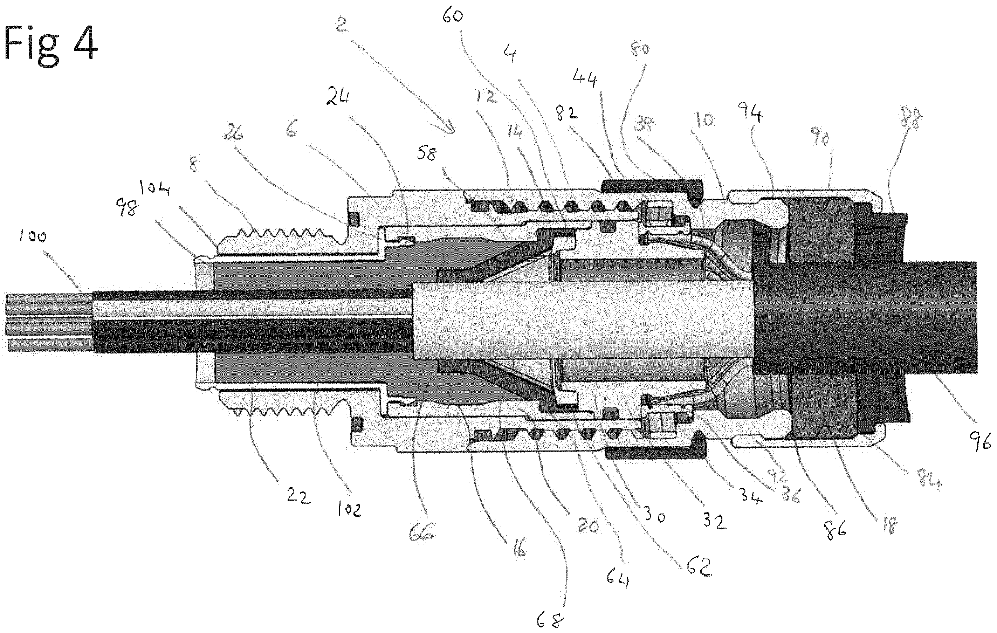

The inner surfaces of barrier tube 20 and transparent tube 22 and the outer surface of the diaphragm seal 58 define a space 102 (Figure 4) in the cable gland between an end 104 of the entry item 6 and the diaphragm seal 58. In the event of an explosion, pressure applied to the seal 58 from the space 102 is resisted by the diaphragm sock 60. Although the non-barrier type cable gland 2 described above prevents transmission of an explosion through the cable gland 2 around the inner and outer periphery of the seal 58, it does not prevent transmission of an explosion between inner conductors 100 of the cable 18, for example when there are sufficiently large gaps between the inner conductors 100 of the cable 18. In order to prevent transmission of an explosion along the inner conductors 100, the use of a barrier-type cable gland 2 is necessary.

Referring to Figure 4, to provide a barrier-type cable gland 2, a dispenser apparatus (not shown) dispenses curable resin material 98 into the space 102 in cable gland 2 of Figure 3 between the inner surface of transparent tube 22 and the inner conductors 100 of the cable 18, so that the space 102 in the cable gland between the end 104 of the entry item 6 and the diaphragm seal 58 is filled with curable resin material 98. The diaphragm seal 58 prevents the curable liquid material 98 from travelling too far along the cable 18, so that highly flowable material 98 can be used, which reduces the likelihood of air voids in the cured resin material. The barrier tube 20 and transparent tube 22 prevent resin material from bonding to an internal surface of the entry item 6, as a result of which the entry item 6 can be easily removed from the second body part 10 after the resin material has cured. This enables the cured resin material to be inspected through the transparent tube 22 by removing the entry item 6 from the second body part 10.

In the event of an explosion inside the enclosure, if any explosion products such as gas and/or flames enter the cable gland 2 (from the left as shown in Figure 4) between the outer surface of the transparent tube 22 and the inner surface of the entry item 6, and the transparent tube 22 is classed as a flamepath or a part of a flamepath i.e. the minimum length of and the maximum clearance or gap between the outer surface of the transparent tube 22 and the inner surface of the entry item 6 are within the specified limits of the prevailing standard/code, then the flame is quickly extinguished.

If the transparent tube 22 is not classed as a flamepath or a part of a flamepath, in the event of an explosion inside the enclosure, if any explosion products such as gas and/or flames enter the cable gland 2 (from the left as shown in Figure 4) between the outer surface of the transparent tube 22 and the inner surface of the entry item 6, the transparent tube 22 is pushed into closer abutment with the barrier tube 20, as a result of which any flame is caused to pass between the outer surface of the barrier tube 20 and the inner surface of the entry item 6, where it is quickly extinguished. The only other path available to flames and other explosion products is along the inner conductors 100 of the cable 18, which is now prevented by the cured resin material surrounding the inner conductors 100. In this case, since the seal 58 has served to prevent the flowable material 98 from travelling too far along the cable 18 while the material 98 cures, the seal 58 becomes redundant, since the cured resin material acts to prevent transmission of flames or other explosion products through the cable gland 2.

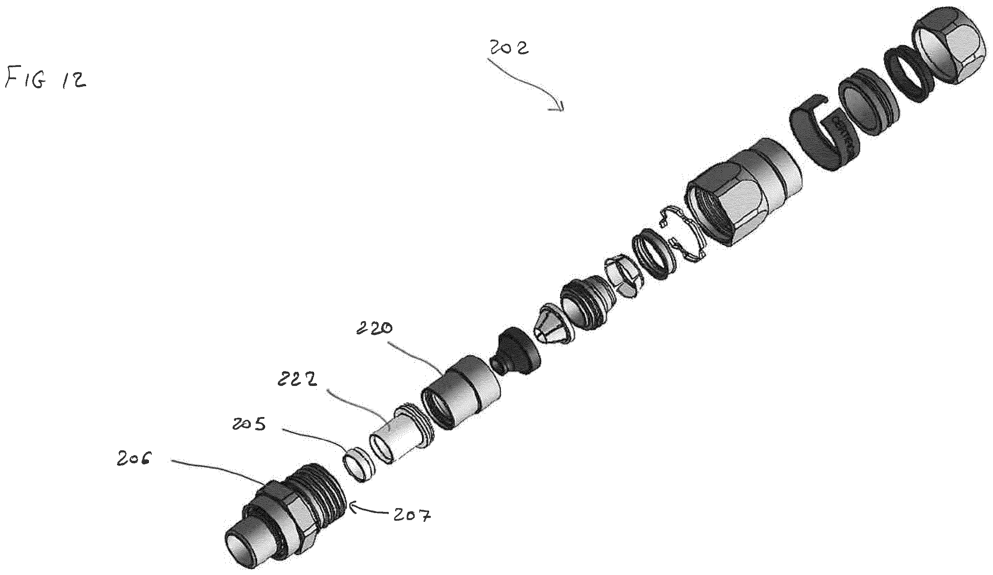

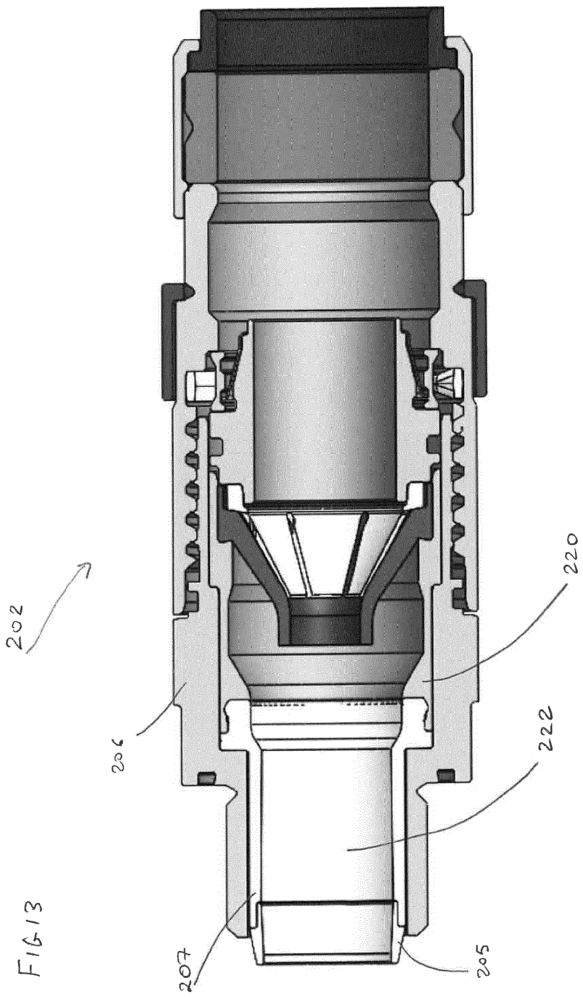

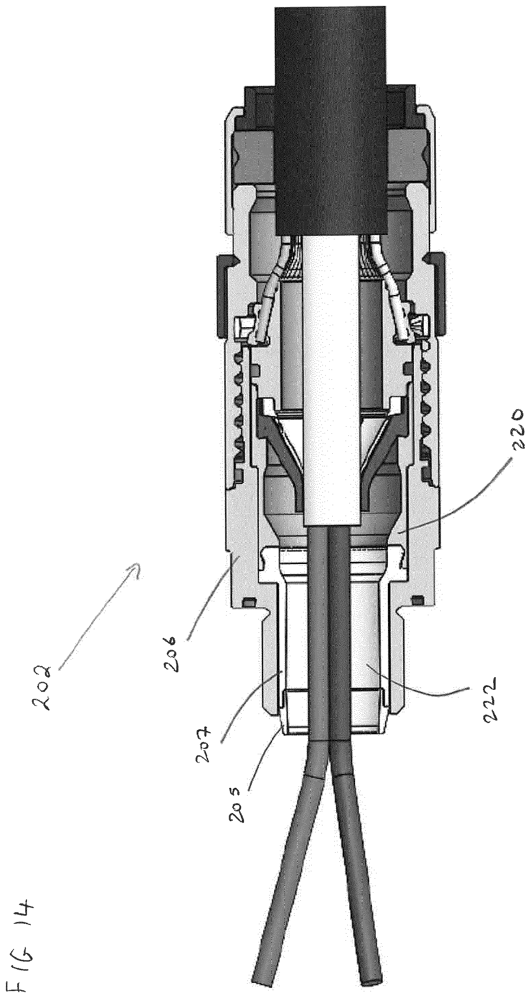

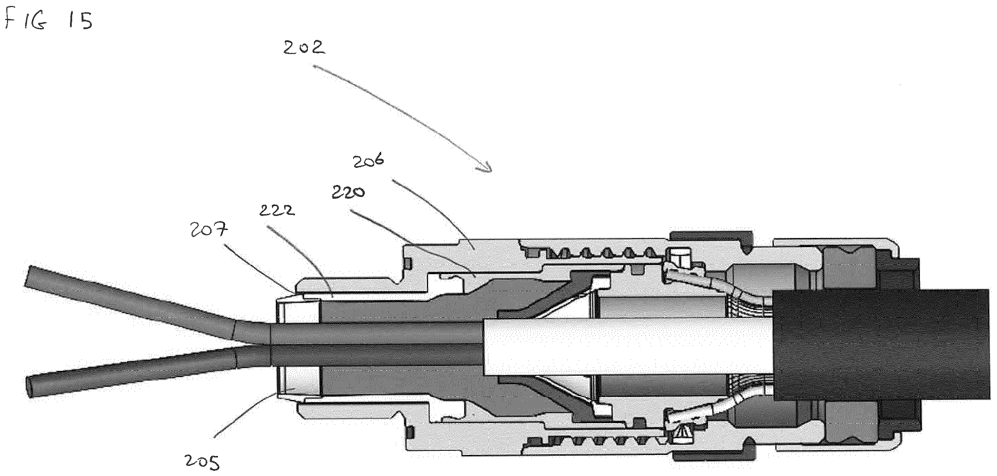

Referring to Figures 12 to 15, in which parts common to the embodiment of Figures 1 to 11 are denoted by like reference numerals but increased by 200, a cable gland 202 of a second embodiment is shown.

The mutually engaging parts of metallic barrier tube 220 and transparent tube 222 are thicker in a radial direction that in the embodiment of Figures 1 to 11, to provide more effective resistance to entry of gas or flame into the barrier tube 220 in the event of an explosion. In addition, the transparent tube 222 is provided with an end portion in the form of a support tube 205, which can be removably of non-removably attached to the end of the transparent tube 222 for engaging an aperture 207 in an end of the entry item 206. The support tube 205 has a greater stiffness than the rest of the transparent tube 222, as a result of which deformation of the transparent tube 222 is minimised during filling with curably liquid material and curing of the material in the event that a flexible transparent tube 222 is used.

It will be appreciated by persons skilled in the art that the above embodiment has been described by way of example only and not in any limitative sense, and that various alterations and modifications are possible without departure from the scope of the disclosure as defined by the appended claims.

## Claims

1. A seal support for supporting a seal in a cable gland, the seal support defining an aperture for receiving part of a cable extending through the cable gland and comprising:
a base portion adapted to be mounted to a body of the cable gland; and
a tapering portion comprising a plurality of support members pivotably mounted to the base portion and adapted to engage the cable and support a seal engaging the cable, wherein at least one said support member has a respective engaging surface for engaging a further said support member adjacent thereto as a result of pivoting of the support members relative to the base portion towards a longitudinal axis of said tapering portion, such that said support member and said further support member engage each other and slide relative to each other.

2. A seal support according to claim 1, wherein said support member and said further support member engage each other along a surface inclined relative to an axial plane of said tapering portion.

3. A sealing device for a cable gland, the sealing device comprising a seal support according to claim 1 or 2 and a seal for engaging a cable extending through a cable gland.

4. A cable gland comprising:
a body for receiving part of a cable extending through the cable gland, the body comprising a first body part and a second body part adapted to be mounted to the first body part; and
a sealing device according to claim 3.

5. A cable gland comprising:
a body for receiving part of a cable extending through the cable gland, the body comprising a first body part and a second body part adapted to be mounted to the first body part;
clamping means comprising an inner clamping part and an outer clamping part for clamping an armour layer of a cable therebetween, and
retaining means for releasably retaining the outer clamping part in the second body part, wherein the retaining means is adapted to resiliently engage an internal surface of the second body part and to resiliently deform as a result of insertion of the outer clamping part into the second body part to enable the outer clamping part to be releasably mounted to the retaining means and be releasably retained in the second body part.

6. A cable gland according to claim 5, wherein the retaining means comprises at least one first retaining part and the outer clamping part comprises at least one protrusion, wherein at least one said first retaining part is resiliently displaceable to enable passage of at least one said protrusion past said deformable part.

7. A cable gland according to claim 6, wherein at least one said first retaining part is adapted to engage at least one recess of the outer clamping part to releasably retain the outer clamping part in the second body part.

8. A cable gland according to claim 6 or 7, wherein at least one said first retaining part includes at least one respective inclined surface adapted to engage the outer clamping part and be resiliently displaced as a result of insertion of the outer clamping part into the second body part.

9. A cable gland according to any one of claims 5 to 8, wherein the retaining means comprises at least one second retaining part adapted to engage an internal surface of the second body part, and the retaining means is deformable to enable disengagement of at least one said second retaining part from the internal surface of the second body part.

10. A cable gland according to claim 9, wherein the retaining means comprises a discontinuous loop of resilient material.
